# EUROPEAN PATENT SPECIFICATION

(11) **EP 2 393 267 B1**
(45) Date of publication and mention of the grant of the patent: **15.03.2017**
(21) Application number: 11161881.5
(22) Date of filing: 11.04.2011
(51) Int. Cl.: H04M 1/725, G06F 3/048

(54) **Mobile terminal with transparent graphical user interface.**
Tragbares Endgerät mit dem transparenten graphischen Benutzeroberfläche.
Terminal mobile avec une interface utilisateur graphique transparent.

(30) Priority: 07.06.2010 KR 20100053502
(43) Date of publication of application: 07.12.2011
(73) Proprietor: LG ELECTRONICS INC., Yeongdeungpo-gu Seoul 150-721 (KR)
(72) Inventor: Kim, Taeyong, 153-023, SEOUL (KR)
(74) Representative: Cabinet Plasseraud

(56) References cited:
- US-A1- 2008 204 424
- Brink: "How to Enable or Disable Aero Glass Transparency in Vista", , 7 April 2007 (2007-04-07), pages 1/6-4/6, XP000002657892, Retrieved from the Internet: URL:http://www.vistax64.com/tutorials/7541 3-aero-glass-transparency.html [retrieved on 2011-08-30]

## Description

### BACKGROUND OF THE INVENTION

### Field of the Invention

The present invention relates to a mobile terminal capable of partially displaying a transparent email list over the content of an email message, or vice versa, and an operating method of the mobile terminal.

### Discussion of the Related Art

Mobile terminals are portable devices capable of performing functions. As the functions of mobile terminals diversify, an increasing number of mobile terminals have been equipped with new technological functions, such as capturing still and moving images, playing music files, providing games, receiving broadcast programs, and providing wireless Internet services. In other words, the mobile terminal has evolved into a multifunctional multimedia player.

A user of the mobile terminal can utilize the wireless Internet functionality for various functions, such as, browsing a web site, chatting, and sending/receiving email.

Conventionally, in order to check email with a mobile terminal, a user may be required to switch back and forth between a display screen showing the content of an email message and a display screen showing an email list. Therefore, in order to reduce user inconvenience caused by the time required to check email, it is necessary to develop ways to quickly check the content of numerous email messages while utilizing a new data input/output method.

### SUMMARY OF THE INVENTION

Features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

In accordance with an embodiment, a method of operating a mobile terminal is presented as recited in claim 1.

Other optional features are presented in dependent claims.

In accordance with another embodiment, a mobile terminal is presented in claim 9 and optional features may be found in its dependent claims.

### BRIEF DESCRIPTION OF THE DRAWINGS

The above and other features and advantages of the present invention will become more apparent by describing in detail preferred embodiments thereof with reference to the attached drawings in which:
FIG. 1 illustrates a block diagram of a mobile terminal according to an embodiment of the present invention.
FIG. 2 illustrates a front perspective view of the mobile terminal shown in FIG. 1.
FIG. 3 illustrates a rear perspective view of the mobile terminal shown in FIG. 2.
FIG. 4 illustrates a flowchart of an operating method of a mobile terminal according to an embodiment of the present invention.
FIG. 5 illustrates a flowchart of an operating mode of a mobile terminal according to another embodiment of the present invention.
FIGS. 6 through 8 illustrate diagrams for explaining the operating method of the embodiment illustrated in FIG. 4.
FIGS. 9 through 11 illustrate diagrams for the operating method of the embodiment illustrated in FIG. 5.

### DETAILED DESCRIPTION OF THE INVENTION

The suffixes 'module', 'unit' and 'part' may be used for elements in order to facilitate the disclosure. Significant meanings or roles may not be given to the suffixes themselves and it is understood that the 'module', 'unit' and 'part' may be used together or interchangeably.

Embodiments of the present disclosure may be applicable to various types of terminals. Examples of such terminals may include mobile terminals as well as stationary terminals, mobile phones, user equipment, smart phones, digital televisions (DTVs), computers, digital broadcast terminals, personal digital assistants, portable multimedia players (PMP) and/or navigators.

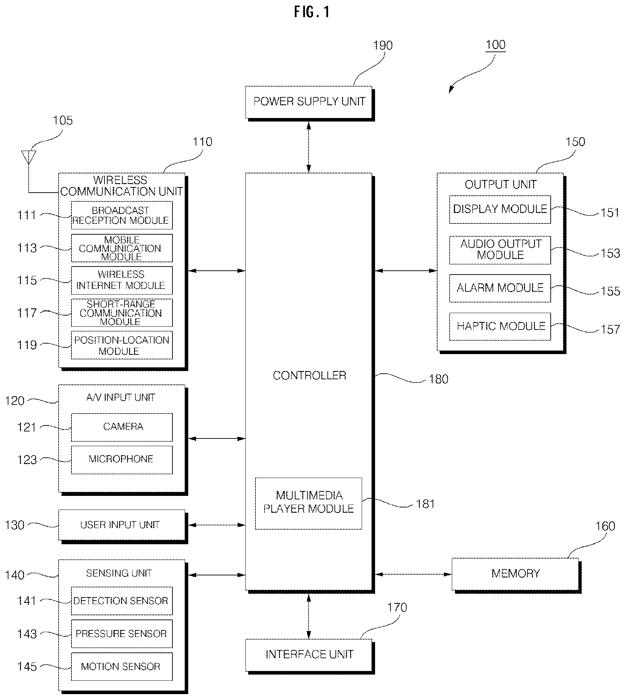

FIG. 1 is a block diagram of a mobile terminal in accordance with an example embodiment. Other embodiments and arrangements may also be provided. FIG. 1 shows a mobile terminal 100 having various components, although other components may also be used. More or less components may alternatively be implemented.

FIG. 1 shows that the mobile terminal 100 include a wireless communication unit 110, an audio/video (A/V) input unit 120, a user input unit 130, a sensing unit 140, an output unit 150, a memory 160, an interface unit 170, a controller 180, and a power supply unit 190.

The wireless communication unit 110 may be configured with a broadcast reception module 111, a mobile communication module 113, a wireless Internet module 115, a short-range communication module 117, and a position-location module 119. The wireless communication unit 110 may include one or more components that permit wireless communication between the mobile terminal 100 and a wireless communication system or a network within which the mobile terminal 100 is located. In case of non-mobile terminals, the wireless communication unit 110 may be replaced with a wired communication unit. The wireless communication unit 110 and the wired communication unit may be commonly referred to as a communication unit.

Examples of broadcast associated information may include information associated with a broadcast channel, a broadcast program, a broadcast service provider, etc. For example, broadcast associated information may include an electronic program guide (EPG) of a digital multimedia broadcasting (DMB) system and an electronic service guide (ESG) of a digital video broadcast-handheld (DVB-H) system.

The broadcast signal may be a TV broadcast signal, a radio broadcast signal, and/or a data broadcast signal. The broadcast signal may further include a broadcast signal combined with a TV or radio broadcast signal.

The broadcast receiving module 111 may receive broadcast signals transmitted from various types of broadcast systems. As a non-limiting example, the broadcasting systems may include a digital multimedia broadcasting-terrestrial (DMB-T) system, a digital multimedia broadcasting-satellite (DMB-S) system, a digital video broadcast-handheld (DVB-H) system, a data broadcasting system known as media forward link only (MediaFLO®) and an integrated services digital broadcast-terrestrial (ISDB-T) system. Reception of multicast signals may also be provided. Data received by the broadcast receiving module 111 may be stored in the memory 160, for example.

The mobile communication module 113 may communicate wireless signals with one or more network entities (e.g. a base station or Node-B). The signals may represent audio, video, multimedia, control signaling, and data, etc.

The wireless Internet module 115 may support Internet access for the mobile terminal 100. This wireless Internet module 115 may be internally or externally coupled to the mobile terminal 100. Suitable technologies for wireless Internet may include, but are not limited to, WLAN (Wireless LAN)(Wi-Fi), Wibro (Wireless broadband), Wimax (World Interoperability for Microwave Access), and/or HSDPA (High Speed Downlink Packet Access). The wireless Internet module 115 may be replaced with a wired Internet module in non-mobile terminals. The wireless Internet module 115 and the wired Internet module may be referred to as an Internet module.

The short-range communication module 117 may facilitate short-range communications. Suitable technologies for short-range communication may include, but are not limited to, radio frequency identification (RFID), infrared data association (IrDA), ultra-wideband (UWB), as well as networking technologies such as Bluetooth and ZigBee.

The GPS module 119 may identify or otherwise obtain a location of the mobile terminal 100. The position-location module 119 may be provided using global positioning system (GPS) components that cooperate with associated satellites, network components, and/or combinations thereof.

The A/V input unit 120 may provide audio or video signal input to the mobile terminal 100. The A/V input unit 120 may include a camera 121 and a microphone 123. The camera 121 may receive and process image frames of still pictures and/or video.

The microphone 123 may receive an external audio signal while the mobile terminal is in a particular mode, such as a phone call mode, a recording mode and/or a voice recognition mode. The received audio signal may then be processed and converted into digital data.

The mobile terminal 100, and in particular, the AN input unit 120, may include a noise removing algorithm (or noise canceling algorithm) to remove noise generated in the course of receiving the external audio signal. Data generated by the AN input unit 120 may be stored in the memory 160, utilized by the output unit 150, and/or transmitted via one or more modules of the wireless communication unit 110. Two or more microphones and/or cameras may also be provided.

The user input unit 130 may generate input data responsive to user manipulation of an associated input device or devices. Examples of such devices may include a keypad, a dome switch, a touchpad (e.g., static pressure/capacitance), a jog wheel and/or a jog switch. A specific example is one in which the user input unit 130 is configured as a touchpad in cooperation with a display, as will be described below.

The sensing unit 140 may provide status measurements of various aspects of the mobile terminal 100. For example, the sensing unit 140 may detect an open/close status (or state) of the mobile terminal 100, a relative positioning of components (e.g., a display and a keypad) of the mobile terminal 100, a change of position of the mobile terminal 100 or a component of the mobile terminal 100, a presence or absence of user contact with the mobile terminal 100, and/or an orientation or acceleration/deceleration of the mobile terminal 100. The sensing unit 140 may also comprise a detection sensor 141, a pressure sensor 143, and a motion sensor 145.

The detection sensor 141 may detect an approaching object to the mobile terminal 100. More specifically, the detection sensor 141 may detect an approaching object based on a change in an alternating current (AC) magnetic field or a static magnetic field, or the rate of change of capacitance. The sensing unit 140 may include two or more detection sensors 141.

The pressure sensor 143 may determine whether pressure is being applied to the mobile terminal 100 or may measure the magnitude of pressure, if any, applied to the mobile terminal 100. The pressure sensor 143 may be installed in a certain part of the mobile terminal 100 where the detection of pressure is necessary. For example, the pressure sensor 143 may be installed in the display module 151. In this example, it is possible to differentiate a typical touch input from a pressure touch input, which is generated by applying greater pressure than that used to generate a typical touch input, based on a signal output by the pressure sensor 143. In addition, it is possible to determine the magnitude of pressure applied to the display module 151 upon receiving a pressure touch input based on the signal output by the pressure sensor 143.

The motion sensor 145 may determine the location and motion of the mobile terminal 100 using an acceleration sensor or a gyro sensor.

Acceleration sensors convert a vibration in acceleration into an electric signal. In general, two or more acceleration sensors representing different axial directions are incorporated into a single package. There are some cases when the detection of only one axial direction, for example, a Z-axis direction, is necessary. Thus, when an X- or Y-axis acceleration sensor, instead of a Z-axis acceleration sensor, is required, the X- or Y-axis acceleration sensor may be mounted on an additional substrate, and the additional substrate may be mounted on a main substrate.

The output unit 150 may output audio signals, video signals and alarm signals. The output unit 150 may include the display module 151, an audio output module 153, an alarm module 155, and a haptic module 157.

The display 151 may display (output) information processed by the terminal 100. For example, in case that the terminal is in a call mode, the display 151 may display a user interface (UI) or a graphic user interface (GUI) associated with the call. If the mobile terminal 100 is in a video communication mode or a photograph mode, the display 151 may display a photographed and/or received picture, a UI or a GUI.

The display 151 may include at least one of a liquid crystal display (LCD), a thin film transistor liquid crystal display (TFT LCD), an organic light-emitting diode (OLED), a flexible display, and a three-dimensional (3D) display.

The display 151 may have a transparent or light-transmissive type configuration to enable an external environment to be seen through. This may be called a transparent display. A transparent OLED (TOLED) may be an example of a transparent display. A backside structure of the display 151 may also have the light-transmissive type configuration. In this configuration, a user may see an object located behind the terminal body through the area occupied by the display 151 of the terminal body.

At least two displays 151 may also be provided. For example, a plurality of displays may be provided on a single face of the terminal 100 by being built in one body or spaced apart from the single face. Alternatively, each of a plurality of displays may be provided on different faces of the terminal 100.

If the display 151 and a sensor for detecting a touch action (hereafter a touch sensor) are constructed in a mutual-layered structure (hereafter a touchscreen), the display 151 may be used as an input device as well as an output device. For example, the touch sensor may include a touch film, a touch sheet, a touchpad and/or the like.

The touch sensor may convert a pressure applied to a specific portion of the display 151 or a variation of electrostatic capacity generated from a specific portion of the display 151 to an electric input signal. The touch sensor may detect a pressure of a touch as well as a position and size of the touch.

If a touch input is provided to the touch sensor, signal(s) corresponding to the touch input may be transferred to a touch controller. The touch controller may process the signal(s) and then transfer corresponding data to the controller 180. The controller 180 may therefore know which portion of the display 151 is touched.

The audio output module 153 may output audio data that is received from the wireless communication unit 110 in a call signal reception mode, a call mode, a recording mode, a voice recognition mode, a broadcast receiving mode and/or the like. The audio output module 153 may output audio data stored in the memory 160. The audio output module 153 may output an audio signal relevant to a function (e.g., a call signal receiving sound, a message receiving sound, etc.) performed by the mobile terminal 100. The audio output module 153 may include a receiver, a speaker, a buzzer and/or the like.

The alarm module 155 may output a signal for announcing an event occurrence of the mobile terminal 100. An event occurring in the mobile terminal 100 may include one of a call signal reception, a message reception, a key signal input, a touch input and/or the like. The alarm 153 may output a signal for announcing an event occurrence by way of vibration or the like as well as a video signal or an audio signal. The video signal may be outputted via the display 151. The audio signal may be outputted via the audio output module 153. The display 151 or the audio output module 153 may be classified as part of the alarm 153.

The haptic module 157 may bring about various haptic effects that can be sensed by a user. Vibration is a representative example for the haptic effect brought about by the haptic module 157. Strength and pattern of the vibration generated from the haptic module 157 may be controllable. For example, vibrations differing from each other may be outputted in a manner of being synthesized together or may be sequentially outputted.

The haptic module 157 may generate various haptic effects including a vibration, an effect caused by such a stimulus as a pin array vertically moving against a contact skin surface, a jet power of air via outlet, a suction power of air via inlet, a skim on a skin surface, a contact of an electrode, an electrostatic power and the like, and/or an effect by hot/cold sense reproduction using an endothermic or exothermic device as well as the vibration.

The haptic module 157 may provide the haptic effect via direct contact. The haptic module 157 may enable a user to experience the haptic effect via muscular sense of a finger, an arm and/or the like. Two or more haptic modules 157 may be provided according to a configuration of the mobile terminal 100.

The memory 160 may store various programs necessary for the operation of the controller 180. In addition, the memory 160 may temporarily store various data such as a list of contacts, messages, still images, or moving images.

The memory 160 may store a program for operations of the controller 180. The memory 160 may temporarily store input/output data (e.g., phonebook, message, still picture, moving picture, etc.). The memory 160 may store data of vibration and sound in various patterns outputted in case of a touch input to the touchscreen.

The memory 160 may include at least one of a flash memory, a hard disk, a multimedia card micro type memory, a card type memory (e.g., SD memory, XD memory, etc.), a random access memory (RAM), a static random access memory (SRAM), a read-only memory (ROM), an electrically erasable programmable read-only memory, a programmable read-only memory, a magnetic memory, a magnetic disk, an optical disk, and/or the like. The mobile terminal 100 may operate in association with a web storage that performs a storage function of the memory 160 in the Internet.

The interface unit 170 may play a role as a passage to external devices connected to the mobile terminal 100. The interface unit 170 may receive data from an external device. The interface unit 170 may be supplied with a power and then the power may be delivered to elements within the mobile terminal 100. The interface unit 170 may enable data to be transferred to an external device from an inside of the mobile terminal 100. The interface unit 170 may include a wired/wireless headset port, an external charger port, a wired/wireless data port, a memory card port, a port for coupling to a device having an identity module, an audio input/output (I/O) port, a video input/output (I/O) port, an earphone port and/or the like.

The controller 180 may control overall operations of the mobile terminal 100. For example, the controller 180 may perform control and processing relevant to a voice call, a data communication, a video conference and/or the like. The controller 180 may have a multimedia module 181 for multimedia playback. The multimedia module 181 may be implemented within the controller 180 or may be configured separate from the controller 180.

The controller 180 may perform pattern recognition processing for recognizing a handwriting input performed on the touchscreen as a character and/or recognizing a picture drawing input performed on the touchscreen as an image. Embodiments of the present disclosure explained in the following description may be implemented within a recording medium that can be read by a computer or a computer-like device using software, hardware or a combination thereof.

According to the hardware implementation, arrangements and embodiments may be implemented using at least one of application specific integrated circuits (ASICs), digital signal processors (DSPs), digital signal processing devices DSPDs), programmable logic devices (PLDs), field programmable gate arrays (FPGAs), processors, controllers, microcontrollers, microprocessors and electrical units for performing other functions. In some cases, embodiments may be implemented by the controller 180.

For a software implementation, arrangements and embodiments described herein may be implemented with separate software modules, such as procedures and functions, each of which may perform one or more of the functions and operations described herein. Software codes may be implemented with a software application written in any suitable programming language and may be stored in memory such as the memory 160, and may be executed by a controller or processor, such as the controller 180.

The power supply unit 190 may be supplied with power by an external power source or an internal power source and may supply power to the other components in the mobile terminal 100.

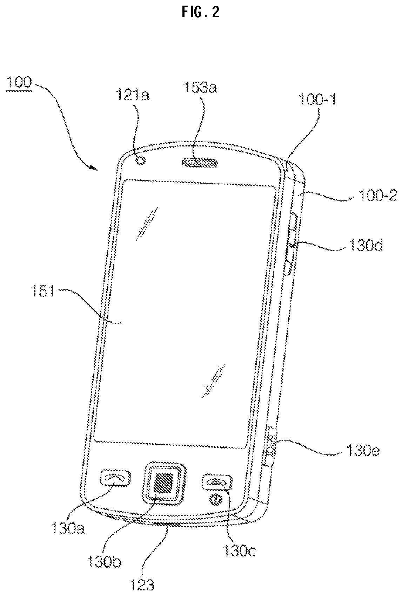

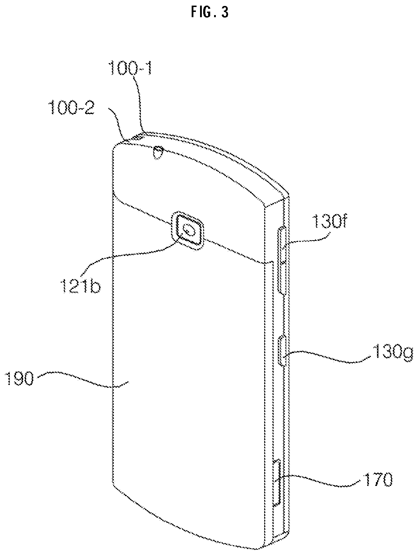

The exterior of the mobile terminal 100 will hereinafter be described in detail with reference to FIGS. 2 and 3. Embodiments of the mobile terminal may be implemented in a variety of different configurations. Examples of such configurations may include a folder-type, a slide-type, a bar-type, a rotational-type, a swing-type and/or combinations thereof.

FIG. 2 illustrates a front perspective view of the mobile terminal 100. Referring to FIG. 2, the exterior of the mobile terminal 100 may be formed by a front case 100-1 and a rear case 100-2. Various electronic devices may be installed in the space formed by the front case 100-1 and the rear case 100-2. The front case 100-1 and the rear case 100-2 may be formed of a synthetic resin through injection molding. Alternatively, the front case 100-1 and the rear case 100-2 may be formed of a metal such as stainless steel (STS) or titanium (Ti).

The display module 151, a first audio output module 153a, a first camera 121a, a first user input module 130a, a second user input module 130b, and a third user input module 130c may be disposed in the main body of the mobile terminal 100, and specifically, in the front case 100-1. Fourth and fifth user input modules 130d and 130e and the microphone 123 may be disposed on one side of the rear case 100-2.

If a touch pad is configured to overlap the display module 151, and thus form a mutual layer structure, the display module 151 may serve as a touch screen. Thus, the user can enter information by touching the display module 151.

The first audio output module 153a may be implemented as a receiver or a speaker. The first camera 121a may be configured to capture a still or moving image. The microphone 123 may be configured to receive the user's voice or other sounds.

The first through seventh user input modules 130a through 130g, respectively, may be collectively referred to as the user input unit 130.

For example, the user input unit 130 may be implemented as a dome switch or touch pad capable of receiving a command or information by being pushed or touched by the user. The user input unit may also be implemented as a wheel, a jog dial, or a joystick capable of receiving a command by being rotated. More specifically, the first through third user input modules 130a through 130c may be used to enter various commands such as "start," "end," and "scroll" to the mobile terminal 100, the fourth user input module 130d may be used to select an operating mode for the mobile terminal 100, and the fifth user input module 130e may serve as a hot key for activating certain functions of the mobile terminal 100.

FIG. 3 illustrates a rear perspective view of the mobile terminal 100. Referring to FIG. 3, a second camera 121b may be disposed at the rear of the rear case 100-2. The sixth and seventh user input modules 130f and 130e and the interface unit 170 may be disposed on one side of the rear case 100-2.

The second camera 121b may have a different photographing direction from the first camera 121a. In addition, the first and second cameras 121a and 121b may have different resolutions.

A camera flash and a mirror may be disposed near the second camera 121b (not shown). The camera flash may be used to illuminate a subject when the user attempts to capture an image of the subject with the second camera 121 b. The mirror may be used for the user to prepare for a self-portrait.

A second audio output module (not shown) may be additionally provided in the rear case 100-2. The second audio output module may provide a stereo function along with the first audio output module 153a. The second audio output module may also be used in a speaker-phone mode.

The interface unit 170 may serve as a pathway for allowing the mobile terminal 100 to exchange data with an external device.

An antenna (not shown) for making or receiving a call and an antenna (not shown) for receiving a broadcast signal may be disposed on one side of the rear case 100-2. The antennas may be installed so as to be able to be retracted from the rear case 100-2.

The power supply unit 190, which supplies power to the mobile terminal 100, may be disposed in the rear case 100-2. The power supply unit may be a rechargeable battery and may be coupled to the rear case 100-2 so as to be attachable to or detachable from the rear case 100-2.

The second camera 121b and the other elements that have been described as being provided in the rear case 100-2 may be provided in the front case 100-1. In addition, the first camera 121a may be configured to be rotatable and thus to cover the photographing direction of the second camera 121b. In this example, the second camera 121b may be optional.

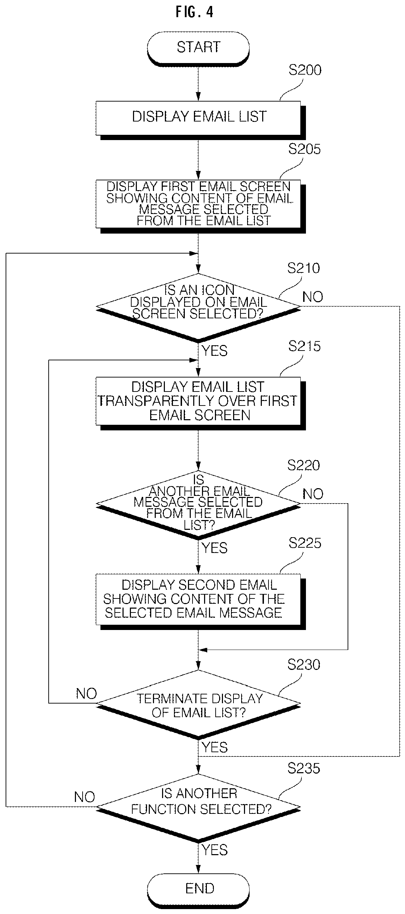

FIG. 4 illustrates a flowchart of an operating method of a mobile terminal according to an embodiment of the present invention.

Referring to FIG. 4, the controller 180 may display an email list on the display module 151 in response to, for example, a user command (S200). Thereafter, if one of a plurality of email messages included in the email list is selected, the controller 180 may display a first email screen showing the content of the selected email message on the display module 151 (S205).

Moreover, if an icon for displaying the email list on the display module 151 is selected in response to an input (S210), the controller 180 may transparently display the email list over the first email screen, such that the content of the selected email message may be visible through the email list (S215). Specifically, the email list may be displayed transparently over the first email screen or vice versa. As a result, the user can simultaneously check the email list and the content of the selected email message.

In order to achieve the process described above an additional menu for adjusting the transparency of a display window or an email screen may be provided. By using the additional menu, it is possible to adjust the transparency of a display window or an email screen and thus display the display window transparently over the email screen or vice versa.

If another email message is selected from the email list (S220), the controller 180 may replace the first email screen with a second email screen showing the content of the email message selected in step S220 (S225). As a result, the content of the email message selected in step S220 may be visible through the display window showing the email list. Alternatively, only the second email screen may be displayed on the display module 151 without the display window showing the email list.

Steps S215 through S225 may be performed repeatedly until the user chooses to terminate the display of the email list (S230).

If the user chooses a function other than checking email (S235), the operating method ends, otherwise, the operating method returns to step S210.

According to the embodiment described above, it is possible to transparently display an email list over the content of an email message selected from the email list and thus allow the user to quickly navigate from one email message to another in the email list. The embodiment has been described with an email list as an example, but the present invention is not restricted to an email list. Specifically, the present invention may also be applied to various other lists such as a list of messages or files.

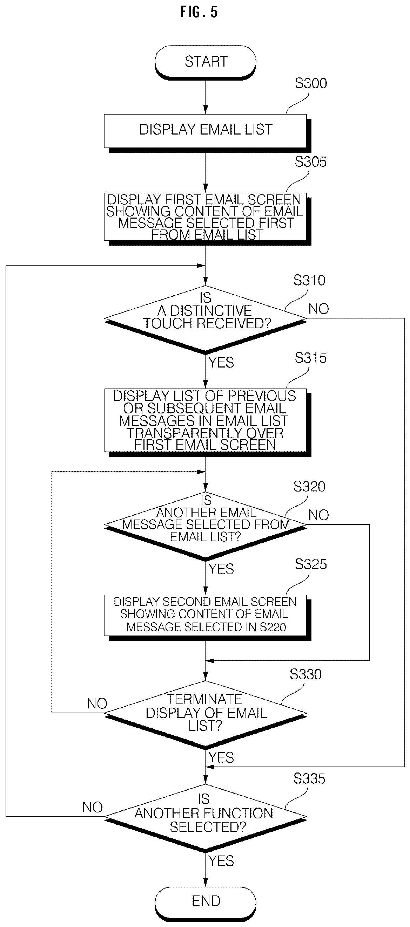

FIG. 5 illustrates a flowchart for a method of operating a mobile terminal according to another embodiment of the present invention. Referring to FIG. 5, steps S300, S305, S330 and S335 are the same as their respective counterparts of FIG. 4 (S200, S205, S230 and S235), and thus, detailed descriptions thereof will be omitted.

Referring to FIG. 5, if a distinctive input, such as a touch-and-drag input, which is generated by touching and dragging the display module 151, or a flick input, which is generated by scratching lightly the display module 151, is received (S310) when a first email screen showing the content of an email message selected from an email list is displayed on the display module 151, the controller 180 may transparently display a list of the previous or subsequent email messages over the first email screen (S315).

More specifically, if the user flicks the first email screen to the left or touches and drags the first email screen to the left, a display window showing at least one subsequent email message in the email list may be displayed over the first email screen. On the other hand, if the user flicks the first email screen to the right or touches and drags the first email screen to the right, a display window showing at least one previous email message in the email list may be displayed over the first email screen.

The number of email messages to be included in the email list displayed in step S315 may be determined in accordance with, for example, a user command. In addition, an additional menu for adjusting the transparency of an email screen or a display window may be provided.

If another email is selected from the email list (S320), the controller 180 may replace the first email screen with a second email screen showing the content of the email selected in step S320 (S330). In this example, the email list may or may not be displayed over the second email screen.

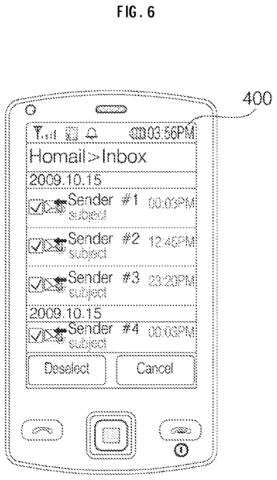

FIGS. 6 through 9 illustrate examples of the embodiment illustrated in FIG. 4.

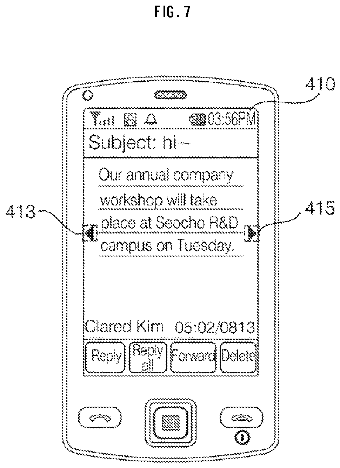

Referring to FIG. 6, a list of one or more email messages may be displayed on a list screen 400. If there are too many email messages to be displayed all at once on the list screen 400, the list screen 400 may be configured to be able to be scrolled up and down. If one of the email messages displayed on the list screen 400 is selected, the content of the selected email message may be displayed on the display module 151 (FIG. 7).

Referring to FIG. 7, the content of an email message selected from an email list and information regarding the selected email message may be displayed on an email screen 410. Left and right arrow icons 413 and 415 may also be displayed on the email screen 410. If one of the left and right arrow icons 413 and 415 is touched, the content of a previous or subsequent email message may be displayed.

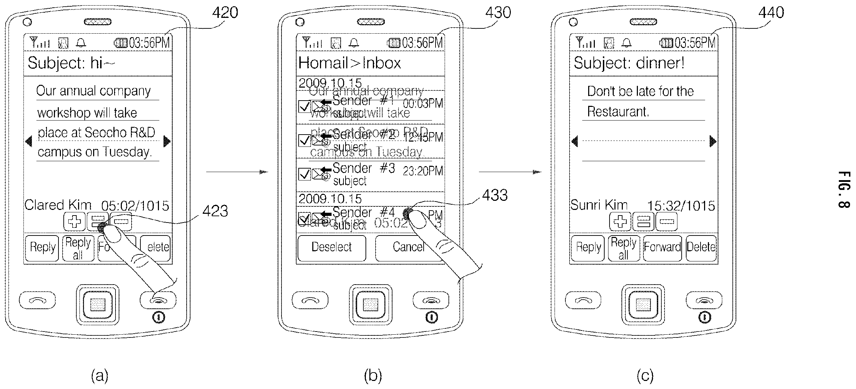

Referring to FIG. 8(a), an icon 423 for displaying an email list may be displayed on an email screen 420. Referring to FIG. 8(b), if the icon 423 is selected in response to an input 425, an overlap screen 430 may be displayed, wherein the overlap screen 430 is displayed transparently over the email screen 420 or vice versa (not shown). Therefore, the user can simultaneously check both the email list and the content of an email message selected from the email list.

Referring to FIG. 8(c), if one of the email messages in the email list is selected from the overlap screen 430, a new email screen 440 showing the content of the selected email message may be displayed. In this example, the email list may or may not be displayed over the new email screen 440. More specifically, the email list may be displayed over the new email screen 440 only when an icon 443 for displaying an email list is selected.

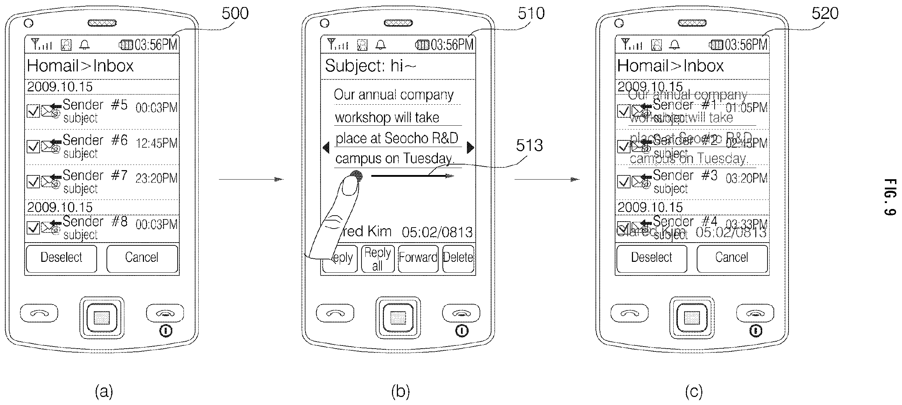

FIGS. 9 through 11 illustrate examples for the embodiment illustrated in FIG. 5.

Referring to FIG. 9(a), a list screen 500 showing an email list including a plurality of email messages may be displayed. Referring to FIG. 9(b), if one of the email messages is selected from the list screen 500, an email screen 510 showing the content of the selected email message may be displayed.

Referring to FIG. 9(c), if the email screen 510 is dragged or flicked to the right, as indicated by reference numeral 513, an overlap screen 520 displaying the subsequent email messages in the email list may be transparently displayed over the email screen 510.

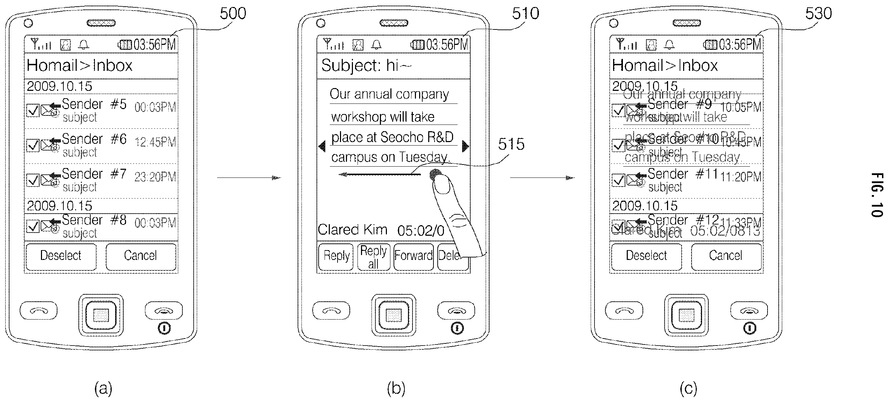

On the other hand, referring to FIGS. 10(a) through 10(c), if the email screen 510 is dragged or flicked to the left, as indicated by reference numeral 515, an overlap screen 530, displaying the list of the previous email messages in the email list may be transparently displayed over the email screen 510.

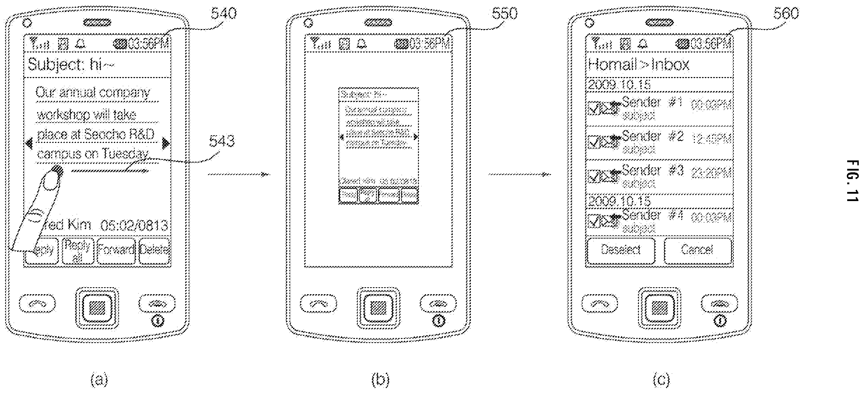

Referring to FIGS. 11(a) and 11(b), if an email screen 540 showing the content of an email message selected from an email list is dragged or flicked to the right, as indicated by reference numeral 543, the size of the email screen 540 may be gradually reduced until the email screen 540 disappears, as indicated by reference numeral 550. Thereafter, referring to FIG. 11(c), a list screen 560 showing a list of the subsequent email messages in the email list may be displayed. On the other hand, if the email screen 540 is dragged or flicked to the left, an overlap screen (not shown) showing a list of the previous email messages in the email list may be displayed.

In short, referring to FIGS. 9 through 11, it is possible to display the content of an email message selected from an email list and then display a list of the previous or subsequent email messages in the email list over the content of the selected email message in response to a distinctive touch input. Therefore, it is possible for the user to quickly navigate from one email message to another in the email list.

The mobile terminal according to the present invention and the operating method of the mobile terminal according to the present invention are not restricted to the exemplary embodiments set forth herein. Therefore, variations and combinations of the exemplary embodiments set forth herein may fall within the scope of the present invention.

The present invention can be realized as code that can be read by a processor (such as a mobile station modem (MSM)) included in a mobile terminal and that can be written on a computer-readable recording medium. The computer-readable recording medium may be any type of recording device in which data is stored in a computer-readable manner. Examples of the computer-readable recording medium include a ROM, a RAM, a CD-ROM, a magnetic tape, a floppy disc, an optical data storage, and a carrier wave (e.g., data transmission through the internet). The computer-readable recording medium can be distributed over a plurality of computer systems connected to a network so that computer-readable code is written thereto and executed therefrom in a decentralized manner. Functional programs, code, and code segments needed for realizing the present invention can be easily construed by one of ordinary skill in the art.

As described above, according to the present invention, it is possible to display a display window showing an email list at least partially transparently over an email screen showing the content of an email message selected from the email list and thus to allow the user to quickly jump from one email message to another in the email list. Therefore, it is possible for the user to quickly check email with convenience. Furthermore, as previously discussed, the embodiments of the present invention are not limited to email messages and email lists, the present invention is applicable to lists comprising various messages, files, applications, or the like.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A method of operating a mobile terminal, the method comprising:
displaying (S200, S300) a first list screen showing a first list comprising at least one item on a display module according to a first user input;
**characterized in that** the method further comprises:
removing (S205, S305) the first list screen and displaying a first display screen showing a content of a first item on the display module when the first item among the first list is selected through a second user input, the first display screen further comprising a first icon for displaying the first list, a second icon for displaying a content of a previous item and a third icon for displaying a content of a subsequent item;
re-displaying (S215) the removed first list screen to be overlapped the first display screen on the display module when the first icon is selected while displaying the first display screen on the display module, wherein the first list screen is at least partially transparent allowing the first display screen to be seen through the first list screen;
generating a second list screen showing a second list comprising at least one subsequent item of the items displayed in the first list and outputting (S310, S315) the generated second list screen to be overlapped the first display screen on the display module when a distinctive touch input to a first direction is detected on the first display screen while displaying the first display screen on the display module, wherein the second list screen is at least partially transparent allowing the first display screen to be seen through the second list screen;
generating a third list screen showing a third list comprising at least one previous item of the items displayed in the first list and outputting (S310, S315) the generated third list screen to be overlapped the first display screen on the display module when a distinctive touch input to a second direction opposite to the first direction is detected on the first display screen while displaying the first display screen on the display module, wherein the third list screen is at least partially transparent allowing the first display screen to be seen through the third list screen; and
replacing (S225, S325) the first display screen with a second display screen showing a content of a second item when the second item is selected from the first, second or third list screen.

2. The method of claim 1, wherein replacing the first display screen further comprises:
outputting a second display screen showing a content of a second item on the display module and displaying the first list screen to overlap the second display screen on the display module when the second item is selected from the first list screen overlapping the first display screen,
wherein the first list screen is at least partially transparent allowing the second display screen to be seen through the first list screen.

3. The method of claim 1, wherein replacing the first display screen further comprises:
exclusively outputting a second display screen showing the content of a second item on the display module when the second item is selected from the first list screen overlapping the first display screen.

4. The method of claim 1, further comprising: gradually reducing the size of the first display screen until the first display screen disappears before outputting the second list screen or the third list screen on the display module.

5. The method of claim 1, wherein the first display screen is displayed at a reduced size in comparison to the second list screen or the third list screen.

6. The method of claim 1, further comprising:
providing a menu for adjusting the transparency of at least one of the first display screen, the first list screen the second list screen and the third list screen.

7. The method of claim 1, wherein the distinctive touch input comprises a flick input or a touch-and-drag input.

8. The method of claim 1, wherein the at least one item, first item, subsequent item, or previous item comprises at least an email, a text message, a file, or a contact.

9. A mobile terminal (100) comprising:
a display module (151) configured to display a first list screen showing a first list comprising at least one item according to a first user input; and
a controller (180) configured to remove the first list screen and display a first display screen showing the content of a first item on the display module when the first item among the first list is selected through a second user input, the first display screen further comprising a first icon for displaying the first list, a second icon for displaying a content of a previous item and a third icon for displaying a content of a subsequent item,
to re-display the removed first list screen to be overlapped the first display screen on the display module when the first icon is selected while displaying the first display screen on the display module, wherein the first list screen is at least partially transparent allowing the first display screen to be seen through the first list screen,
to generate a second list screen showing a second list comprising at least one subsequent item of the items displayed in the first list and output the generated second list screen to be overlapped the first display screen on the display module when a distinctive touch input to a first direction is detected on the first display screen while displaying the first display screen on the display module, wherein the second list screen is at least partially transparent allowing the first display screen to be seen through the second list screen,
to generate a third list screen showing a third list comprising at least one previous item of the items displayed in the first list and output the generated third list screen to be overlapped the first display screen on the display module when a distinctive touch input to a second direction opposite to the first direction is detected on the first display screen while displaying the first display screen on the display module, wherein the third list screen is at least partially transparent allowing the first display screen to be seen through the third list screen, and
to replace the first display screen with a second display screen showing a content of a second item when the second item is selected from the first, second or third list screen.

10. The mobile terminal of claim 9, wherein the controller outputs a second display screen showing a content of a second item on the display module when the second item is selected from the first list screen overlapping the first display screen, and
wherein the controller outputs the first list screen to overlap the second display screen, such that the first list screen is at least partially transparent allowing the second display screen to be seen through the first list screen.

11. The mobile terminal of claim 9, wherein the controller is further configured to exclusively output a second display screen showing the content of a second item on the display module when the second item is selected from the first list screen overlapping the first display screen.

12. The mobile terminal of claim 9, wherein the controller is further configured to provide a menu for adjusting the transparency of at least one of the first display screen, the first list screen, the second list screen and the third list screen.

## Patentansprüche

1. Verfahren zum Bedienen eines tragbaren Endgeräts, wobei das Verfahren
umfasst:
Anzeigen (S200, S300) eines ersten Listenbildschirms, der eine zumindest ein Element umfassende erste Liste zeigt, auf einem Anzeigemodul entsprechend einer ersten Benutzereingabe;
**dadurch gekennzeichnet, dass** das Verfahren weiterhin umfasst:
Entfernen (S205, S305) des ersten Listenbildschirms und Anzeigen eines einen Inhalt eines ersten Elements zeigenden ersten Anzeigebildschirms auf dem Anzeigemodul, wenn das erste Element aus der ersten Liste durch eine zweite Benutzereingabe ausgewählt wird, wobei der erste Anzeigebildschirm weiterhin ein erstes Icon zum Anzeigen der ersten Liste, ein zweites Icon zum Anzeigen eines Inhalts eines vorangehenden Elements und ein drittes Icon zum Anzeigen eines Inhalts eines nachfolgenden Elements umfasst;
erneutes Anzeigen (S215) des entfernten ersten Listenbildschirms in Überlappung mit dem ersten Anzeigebildschirm auf dem Anzeigemodul, wenn das erste Icon ausgewählt wird, während der erste Anzeigebildschirm auf dem Anzeigemodul angezeigt wird, wobei der erste Listenbildschirm zumindest teilweise transparent ist, wodurch der erste Anzeigebildschirm durch den ersten Listenbildschirm hindurch sichtbar ist;
Erzeugen eines zweiten Listenbildschirms, der eine zweite Liste zeigt, die zumindest ein nachfolgendes Element der in der ersten Liste angezeigten Elemente umfasst, und Ausgeben (S310, S315) des erzeugten zweiten Listenbildschirms in Überlappung mit dem ersten Anzeigebildschirm auf dem Anzeigemodul, wenn eine unverwechselbare Berührungseingabe in eine erste Richtung auf dem ersten Anzeigebildschirm während des Anzeigens des ersten Anzeigebildschirms auf dem Anzeigemodul erkannt wird, wobei der zweite Listenbildschirm zumindest teilweise transparent ist, wodurch der erste Anzeigebildschirm durch den zweiten Listenbildschirm hindurch sichtbar ist;
Erzeugen eines dritten Listenbildschirms, der eine dritte Liste zeigt, die zumindest ein vorangehendes Element der in der ersten Liste angezeigten Elemente umfasst, und Ausgeben (S310, S315) des erzeugten dritten Listenbildschirms in Überlappung mit dem ersten Anzeigebildschirm auf dem Anzeigemodul, wenn eine unverwechselbare Berührungseingabe in eine zweite Richtung entgegengesetzt der ersten Richtung auf dem ersten Anzeigebildschirm während des Anzeigens des ersten Anzeigebildschirms auf dem Anzeigemodul erkannt wird, wobei der dritte Listenbildschirm zumindest teilweise transparent ist, wodurch der erste Anzeigebildschirm durch den dritten Listenbildschirm hindurch sichtbar ist; und
Ersetzen (S225, S325) des ersten Anzeigebildschirms durch einen zweiten Anzeigebildschirm, der einen Inhalt eines zweiten Elements zeigt, wenn das zweite Element aus dem ersten, zweiten oder dritten Listenbildschirm ausgewählt wird.

2. Verfahren nach Anspruch 1, wobei das Ersetzen des ersten Anzeigebildschirms weiterhin umfasst:
Ausgeben eines einen Inhalt eines zweiten Elements zeigenden zweiten Anzeigebildschirms auf dem Anzeigemodul und Anzeigen des ersten Listenbildschirms in Überlappung mit dem zweiten Anzeigebildschirm auf dem Anzeigemodul, wenn das zweite Element aus dem den ersten Anzeigebildschirm überlappenden ersten Listenbildschirm ausgewählt wird,
wobei der erste Listenbildschirm zumindest teilweise transparent ist, wodurch der zweite Anzeigebildschirm durch den ersten Listenbildschirm hindurch sichtbar ist.

3. Verfahren nach Anspruch 1, wobei das Ersetzen des ersten Anzeigebildschirms weiterhin umfasst:
ausschließliches Ausgeben eines den Inhalt eines zweiten Elements zeigenden zweiten Anzeigebildschirms auf dem Anzeigemodul, wenn das zweite Element aus dem den ersten Anzeigebildschirm überlappenden ersten Listenbildschirm ausgewählt wird.

4. Verfahren nach Anspruch 1, weiterhin umfassend: allmähliches Verringern der Größe des ersten Anzeigebildschirms, bis der erste Anzeigebildschirm verschwindet, bevor der zweite Listenbildschirm oder der dritte Listenbildschirm auf dem Anzeigemodul ausgegeben wird.

5. Verfahren nach Anspruch 1, wobei der erste Anzeigebildschirm im Vergleich zu dem zweiten Listenbildschirm oder dem dritten Listenbildschirm in einer verringerten Größe angezeigt wird.

6. Verfahren nach Anspruch 1, weiterhin umfassend:
Bereitstellen eines Menüs zum Anpassen der Transparenz zumindest eines von dem ersten Anzeigebildschirm, dem ersten Listenbildschirm, dem zweiten Listenbildschirm und dem dritten Listenbildschirm.

7. Verfahren nach Anspruch 1, wobei die unverwechselbare Berührungseingabe eine Eingabe durch schnelles Wischen oder eine Eingabe durch Berühren und Ziehen umfasst.

8. Verfahren nach Anspruch 1, wobei das zumindest eine Element, erste Element, nachfolgende Element oder vorangehende Element zumindest eine E-Mail, eine Textnachricht, eine Datei oder einen Kontakt umfasst.

9. Tragbares Endgerät (100), umfassend:
ein Anzeigemodul (151), ausgelegt zum Anzeigen eines ersten Listenbildschirms, der eine zumindest ein Element umfassende erste Liste zeigt, entsprechend einer ersten Benutzereingabe; und
einen Controller (180), ausgelegt zum Entfernen des ersten Listenbildschirms und Anzeigen eines den Inhalt eines ersten Elements zeigenden ersten Anzeigebildschirms auf dem Anzeigemodul, wenn das erste Element aus der ersten Liste durch eine zweite Benutzereingabe ausgewählt wird, wobei der erste Anzeigebildschirm weiterhin ein erstes Icon zum Anzeigen der ersten Liste, ein zweites Icon zum Anzeigen eines Inhalts eines vorangehenden Elements und ein drittes Icon zum Anzeigen eines Inhalts eines nachfolgenden Elements umfasst,
zum erneuten Anzeigen des entfernten ersten Listenbildschirms in Überlappung mit dem ersten Anzeigebildschirm auf dem Anzeigemodul, wenn das erste Icon ausgewählt wird, während der erste Anzeigebildschirm auf dem Anzeigemodul angezeigt wird, wobei der erste Listenbildschirm zumindest teilweise transparent ist, wodurch der erste Anzeigebildschirm durch den ersten Listenbildschirm hindurch sichtbar ist,
zum Erzeugen eines zweiten Listenbildschirms, der eine zweite Liste zeigt, die zumindest ein nachfolgendes Element der in der ersten Liste angezeigten Elemente umfasst, und Ausgeben des erzeugten zweiten Listenbildschirms in Überlappung mit dem ersten Anzeigebildschirm auf dem Anzeigemodul, wenn eine unverwechselbare Berührungseingabe in eine erste Richtung auf dem ersten Anzeigebildschirm während des Anzeigens des ersten Anzeigebildschirms auf dem Anzeigemodul erkannt wird, wobei der zweite Listenbildschirm zumindest teilweise transparent ist, wodurch der erste Anzeigebildschirm durch den zweiten Listenbildschirm hindurch sichtbar ist,
zum Erzeugen eines dritten Listenbildschirms, der eine dritte Liste zeigt, die zumindest ein vorangehendes Element der in der ersten Liste angezeigten Elemente umfasst, und Ausgeben des erzeugten dritten Listenbildschirms in Überlappung mit dem ersten Anzeigebildschirm auf dem Anzeigemodul, wenn eine unverwechselbare Berührungseingabe in eine zweite Richtung entgegengesetzt der ersten Richtung auf dem ersten Anzeigebildschirm während des Anzeigens des ersten Anzeigebildschirms auf dem Anzeigemodul erkannt wird, wobei der dritte Listenbildschirm zumindest teilweise transparent ist, wodurch der erste Anzeigebildschirm durch den dritten Listenbildschirm hindurch sichtbar ist, und
zum Ersetzen des ersten Anzeigebildschirms durch einen zweiten Anzeigebildschirm, der einen Inhalt eines zweiten Elements zeigt, wenn das zweite Element aus dem ersten, zweiten oder dritten Listenbildschirm ausgewählt wird.

10. Tragbares Endgerät nach Anspruch 9, wobei der Controller auf dem Anzeigemodul einen zweiten Anzeigebildschirm ausgibt, der einen Inhalt eines zweiten Elements zeigt, wenn das zweite Element aus dem den ersten Anzeigebildschirm überlappenden ersten Listenbildschirm ausgewählt wird, und
wobei der Controller den ersten Listenbildschirm in Überlappung mit dem zweiten Anzeigebildschirm ausgibt, sodass der erste Listenbildschirm zumindest teilweise transparent ist, wodurch der zweite Anzeigebildschirm durch den ersten Listenbildschirm hindurch sichtbar ist.

11. Tragbares Endgerät nach Anspruch 9, wobei der Controller weiterhin ausgelegt ist zum ausschließlichen Ausgeben eines den Inhalt eines zweiten Elements zeigenden zweiten Anzeigebildschirms auf dem Anzeigemodul, wenn das zweite Element aus dem den ersten Anzeigebildschirm überlappenden ersten Listenbildschirm ausgewählt wird.

12. Tragbares Endgerät nach Anspruch 9, wobei der Controller weiterhin ausgelegt ist zum Bereitstellen eines Menüs zum Anpassen der Transparenz zumindest eines von dem ersten Anzeigebildschirm, dem ersten Listenbildschirm, dem zweiten Listenbildschirm und dem dritten Listenbildschirm.

## Revendications

1. Procédé de fonctionnement d'un terminal mobile, le procédé comprenant :
l'affichage (S200, S300) d'un premier écran de liste montrant une première liste comprenant au moins un élément sur un module d'affichage selon une première entrée d'utilisateur ;
**caractérisé en ce que** le procédé comprend en outre :
la suppression (S205, S305) du premier écran de liste et l'affichage d'un premier écran d'affichage montrant un contenu d'un premier élément sur le module d'affichage lorsque le premier élément parmi la première liste est sélectionné par le biais d'une seconde entrée d'utilisateur, le premier écran d'affichage comprenant en outre une première icône pour l'affichage de la première liste, une deuxième icône pour l'affichage d'un contenu d'un élément précédent et une troisième icône pour l'affichage d'un contenu d'un élément suivant ;
le réaffichage (S215) du premier écran de liste supprimé pour recouvrir le premier écran d'affichage sur le module d'affichage lorsque la première icône est sélectionnée pendant l'affichage du premier écran d'affichage sur le module d'affichage, dans lequel le premier écran de liste est au moins en partie transparent, permettant de voir le premier écran d'affichage à travers le premier écran de liste ;
la génération d'un deuxième écran de liste montrant une seconde liste comprenant au moins un élément suivant des éléments affichés dans la première liste et la production en sortie (S310, S315) du deuxième écran de liste généré pour recouvrir le premier écran d'affichage sur le module d'affichage lorsqu'une entrée tactile distinctive vers une première direction est détectée sur le premier écran d'affichage pendant l'affichage du premier écran d'affichage sur le module d'affichage, dans lequel le deuxième écran de liste est au moins en partie transparent permettant de voir le premier écran d'affichage à travers le deuxième écran de liste ;
la génération d'un troisième écran de liste montrant une troisième liste comprenant au moins un élément précédent des éléments affichés dans la première liste et la production en sortie (S310, S315) du troisième écran de liste généré pour recouvrir le premier écran d'affichage sur le module d'affichage lorsqu'une entrée tactile distinctive vers une seconde direction opposée à la première direction est détectée sur le premier écran d'affichage durant l'affichage du premier écran d'affichage sur le module d'affichage, dans lequel le troisième écran de liste est au moins en partie transparent permettant de voir le premier écran d'affichage à travers le troisième écran de liste ; et
le remplacement (S225, S325) du premier écran d'affichage par un deuxième écran d'affichage montrant un contenu d'un second élément lorsque le second élément est sélectionné parmi le premier, le deuxième ou le troisième écran de liste.

2. Procédé selon la revendication 1, dans lequel le remplacement du premier écran d'affichage comprend en outre :
la production en sortie d'un deuxième écran d'affichage montrant un contenu d'un second élément sur le module d'affichage et l'affichage du premier écran de liste pour recouvrir le deuxième écran d'affichage sur le module d'affichage lorsque le second élément est sélectionné dans le premier écran de liste recouvrant le premier écran d'affichage,
dans lequel le premier écran de liste est au moins en partie transparent permettant de voir le deuxième écran d'affichage à travers le premier écran de liste.

3. Procédé selon la revendication 1, dans lequel le remplacement du premier écran d'affichage comprend en outre :
la production en sortie exclusive d'un deuxième écran d'affichage montrant le contenu d'un second élément sur le module d'affichage lorsque le second élément est sélectionné parmi le premier écran de liste recouvrant le premier écran d'affichage.

4. Procédé selon la revendication 1, comprenant en outre :
la réduction progressive de la taille du premier écran d'affichage jusqu'à ce que le premier écran d'affichage disparaisse avant la production en sortie du deuxième écran de liste ou du troisième écran de liste sur le module d'affichage.

5. Procédé selon la revendication 1, dans lequel le premier écran d'affichage est affiché à une taille réduite en comparaison au deuxième écran de liste ou au troisième écran de liste.

6. Procédé selon la revendication 1, comprenant en outre :
la fourniture d'un menu pour ajuster la transparence d'au moins un écran parmi le premier écran d'affichage, le premier écran de liste, le deuxième écran de liste et le troisième écran de liste.

7. Procédé selon la revendication 1, dans lequel l'entrée tactile distinctive comprend une entrée frapper légèrement ou une entrée toucher et glisser.

8. Procédé selon la revendication 1, dans lequel l'au moins un élément, un premier élément, un élément suivant ou un élément précédent comprend au moins un courrier électronique, un message textuel, un fichier ou un contact.

9. Terminal mobile (100) comprenant :
un module d'affichage (151) configuré pour afficher un premier écran de liste montrant une première liste comprenant au moins un élément selon une première entrée d'utilisateur ; et
un contrôleur (180) configuré pour supprimer le premier écran de liste et pour afficher un premier écran d'affichage montrant le contenu d'un premier élément sur le module d'affichage lorsque le premier élément parmi la première liste est sélectionné par le biais d'une seconde entrée d'utilisateur, le premier écran d'affichage comprenant en outre une première icône pour l'affichage de la première liste, une deuxième icône pour l'affichage d'un contenu d'un élément précédent et une troisième icône pour l'affichage d'un contenu d'un élément suivant,
pour réafficher le premier écran de liste supprimé pour recouvrir le premier écran d'affichage sur le module d'affichage lorsque la première icône est sélectionnée durant l'affichage du premier écran d'affichage sur le module d'affichage, dans lequel le premier écran de liste est au moins en partie transparent permettant de voir le premier écran d'affichage à travers le premier écran de liste,
pour générer un deuxième écran de liste montrant une deuxième liste comprenant au moins un élément suivant des éléments affichés dans la première liste et produire en sortie le deuxième écran de liste généré pour recouvrir le premier écran d'affichage sur le module d'affichage lorsqu'une entrée tactile distinctive vers une première direction est détectée sur le premier écran d'affichage pendant l'affichage du premier écran d'affichage sur le module d'affichage, dans lequel le deuxième écran de liste est au moins en partie transparent permettant de voir le premier écran d'affichage à travers le deuxième écran de liste,
pour générer un troisième écran de liste montrant une troisième liste comprenant au moins un élément précédent des éléments affichés dans la première liste et produire en sortie le troisième écran de liste généré pour recouvrir le premier écran d'affichage sur le module d'affichage lorsqu'une entrée tactile distinctive vers une seconde direction opposée à la première direction est détectée sur le premier écran d'affichage pendant l'affichage du premier écran d'affichage sur le module d'affichage, dans lequel le troisième écran de liste est au moins en partie transparent permettant de voir le premier écran d'affichage à travers le troisième écran de liste, et pour remplacer le premier écran d'affichage par un deuxième écran d'affichage montrant un contenu d'un second élément lorsque le second élément est sélectionné dans le premier, le deuxième ou le troisième écran de liste.

10. Terminal mobile selon la revendication 9, dans lequel le contrôleur produit en sortie un deuxième écran d'affichage montrant un contenu d'un second élément sur le module d'affichage lorsque le second élément est sélectionné dans le premier écran de liste recouvrant le premier écran d'affichage, et
dans lequel le contrôleur produit en sortie le premier écran de liste pour recouvrir le deuxième écran d'affichage, de sorte que le premier écran de liste est au moins en partie transparent permettant de voir le deuxième écran d'affichage à travers le premier écran de liste.

11. Terminal mobile selon la revendication 9, dans lequel le contrôleur est en outre configuré pour produire en sortie exclusivement un deuxième écran d'affichage montrant le contenu d'un second élément sur le module d'affichage lorsque le second élément est sélectionné dans le premier écran de liste recouvrant le premier écran d'affichage.

12. Terminal mobile selon la revendication 9, dans lequel le contrôleur est en outre configuré pour fournir un menu pour ajuster la transparence d'au moins un écran parmi le premier écran d'affichage, le premier écran de liste, le deuxième écran de liste et le troisième écran de liste.
